# EUROPÄISCHE PATENTSCHRIFT

(11) **EP 0 449 154 B1**
(45) Veröffentlichungstag und Bekanntmachung des Hinweises auf die Patenterteilung: **15.02.1995**
(21) Anmeldenummer: 91104603.5
(22) Anmeldetag: 23.03.1991
(51) Int. Cl.: G06F 1/00

(54) **Computer-Steuersystem**
Computer control system
Système de commande de calculateur

(30) Priorität: 24.03.1990 DE 4009523
(43) Veröffentlichungstag der Anmeldung: 02.10.1991
(73) Patentinhaber: AUTONOM COMPUTER VERTRIEBSGESELLSCHAFT MBH, D-42489 Wülfrath (DE)
(72) Erfinder: Brokbals, Ernst, W-4815 Schloss Holte (DE); Schlosshan, Dieter, W-4020 Mettman (DE); Werner, Horst, W-5064 Rösrath (DE)
(74) Vertreter: Patentanwälte Dr. Solf & Zapf

(56) Entgegenhaltungen:
- EP-A- 0 230 351
- US-A- 4 864 542
- IBM TECHNICAL DISCLOSURE BULLETIN. Bd. 18, Nr. 10, März 1976, NEW YORK USSeiten 3197 - 3198; R.G.SIMPSON: 'UNAUTHORIZED USE PROTECTION FOR A COMPUTER'
- Produktblatt MXB2, Siemens AG, München, Feb. 1989 mit Betriebsanleitung USV, Siemens AG, München, Juni 1989
- N. Meder, P. Scheuber: "MS-OS/2 Presentation manager", Markt & Technik Verlag AG, Haar bei München, DE, 1990

## Beschreibung

Die Erfindung betrifft ein System zum Ansteuern eines Computers.

Bei bekannten Computer-Systemen (Micro-Computer, Mehrplatz-Systeme mit zentralem Prozessor, Personal-Computer) besteht nachteiligerweise stets eine große Gefahr, daß gespeicherte bzw. während des "normalen" Betriebes nur zwischengespeicherte Daten entweder von unberechtigten Personen "entwendet" bzw. vernichtet (gelöscht) werden oder aber insbesondere durch unsachgemäßes Ausschalten des Computers vor Ablauf einer softwaremäßigen Ausschaltroutine bzw. bei Ausfall der Versorgungs-Netzspannung verlorengehen (Datenverluste, Datei-Zerstörungen). So ist es z.B. bei bekannten Computersystemen ohne weiteres für jedermann, folglich auch für Unberechtigte, möglich, den Computer einzuschalten sowie auch eine sogenannte Datensicherung durchzuführen, wobei Daten auf einen "transportablen" Datenträger, wie beispielsweise eine Datendiskette oder -kassette, aufgezeichnet werden, so daß die Daten dann zusammen mit dem Datenträger entwendet und einer unberechtigten Weiterverwendung zugeführt werden können. Dies kann aber im Hinblick auf den heute geforderten Datenschutz nicht mehr in Kauf genommen werden.

In dem Firmenprospekt "MXB2 Multifunktionaler SINIX Bankencomputer" Siemens AG München, Februar 1988, ist beschrieben, daß ein Computer mit einer externen Stromversorgungspufferung (USV) verbunden ist, die bei Netzausfall für die erforderliche Zeit sorgt, um einen ordnungsgemäßen "SHUT-DOWN" des Computers sicherzustellen. Somit soll hier offensichtlich bei einem Ausfall der "normalen" computereigenen Versorgungsspannung ein Datenverlust vermieden werden.

Der weitere Siemens-Prospekt "USV 99028-610", Juni 1989, beschreibt eine "statische unterbrechungsfreie Stromversorgung für SINIX Computer". Hieraus, bzw. in Kombination mit dem obigen Prospekt "MXB2" ergibt sich im Grunde nur, daß zur Spannungsüberwachung und im Falle eines Versorgungsspannungsausfalles der Computer und die USV über eine Signalverbindung (9-polige Sub-D-Buchse) Steuersignale austauschen, wodurch offensichtlich bei einem Spannungsausfall für die Zeit eines "Shut-Down" des Computers die Spannungsversorgung von der USV übernommen wird (Akku-Betrieb). Darüber hinausgehend ist bezüglich des Abschaltens des Computers in diesen Prospekten nichts offenbart.

In der Literaturstelle Meder, Scheuber: "MS-OS/2 Presentation Manager", Markt & Technik Verlag AG, Haar bei München, Deutschland, 1990, ist ein Computer-Betriebssystem "Microsoft OS/2" beschrieben, welches angeblich schon im Jahre 1989 weltweit installiert wurde. Hierbei kann softwaremäßig durch Menue-Auswahl ein "SHUT-DOWN"-Befehl (Shut-Down = stillegen) eingegeben werden, wodurch alle Tasks nacheinander geschlossen werden. Mit einem "CLOSE"-Befehl kann dies auch für jede einzelne Task veranlaßt werden. Auch hier ist über den weiteren Vorgang zum Ausschalten des Computers nichts offenbart.

Bei den in allen diesen Literaturstellen beschriebenen Systemen kann nicht verhindert werden, daß es durch unsachgemäßes, z.B. zu frühes, vor Abschluß einer Daten-Abspeicherung veranlaßtes Ausschalten der Netzspannung des Computers zu folgenschweren Datenverlusten kommt.

Dementsprechend liegt der Erfindung die Aufgabe zugrunde, Mittel zu schaffen, um bei Computer-Systemen eine erhöhte Sicherheit gegen Datenverlust sowie Datenmißbrauch gewährleisten zu können.

Erfindungsgemäß wird dies durch ein Steuersystem gemäß dem Patentanspruch 1 erreicht. Vorteilhafte Weiterbildungen der Erfindung sind in den hiervon abhängigen Ansprüchen enthalten.

Erfindungsgemäß ist somit dem Computer, d.h. jeder in einem Computer-System vorhandenen "Intelligenz", eine Steuereinheit vorgeschaltet, die zumindest das "normale" Ausschalten des Computers derart steuert, daß auf jeden Fall auf einen Abschaltbefehl hin zunächst eine kontrollierte Abschaltroutine vollständig durchgeführt und erst dann der Computer spannungsmäßig von der Steuereinheit abgeschaltet wird. Auf diese Weise sind Datenverluste durch unsachgemäßes bzw. versehentliches Abschalten des Computers völlig ausgeschlossen, denn zum Abschalten muß erfindungsgemäß dem Computer im Bildschirmdialog ein entsprechender Software-Befehl eingegeben werden. Danach läuft die Abschaltroutine softwaremäßig ab. Der Abschluß dieser Routine wird an die erfindungsgemäße Steuereinheit gemeldet, die erst dann den Computer hardwaremäßig durch Unterbrechen der Versorgungsspannung abschaltet. Ein direktes Abschalten des Computers, z.B. durch Betätigung eines Netzschalters, ist somit durch die Erfindung überhaupt nicht möglich, weil ja der Computer gar keine eigene (zumindest keine wirksame) Spannungsversorgung besitzt. Später kann nach Wiedereinschalten des Computers jederzeit auf alle Daten wieder zurückgegriffen werden.

Es ist zudem vorteilhaft, wenn die Steuereinheit auch den Einschaltvorgang steuert, wobei der Computer über die Steuereinheit erst dann eingeschaltet wird, wenn sich der Benutzer insbesondere über eine Magnetkarte legitimiert hat. Die Magnetkarte wird in einem mit der Steuereinheit verbundenen Magnetkarten-Lesegerät ausgelesen. Die Daten (Kodierung) werden mit in einem Festwertspeicher der Steuereinheit gespeicherten Soll-Daten verglichen, und erst nach positivem Ausgang des Vergleichs, d.h. bei Übereinstimmung, schaltet die Steuereinheit die Versorgungsspannung für den Computer ein. Nach diesem "hardwaremäßigen" Einschaltvorgang läuft das "softwaremäßige" Starten des jeweiligen Computer-Betriebssystems nach bekannten Schemen ab.

Auch eine Datensicherung ist vorzugsweise erst nach einer derartigen Legitimation insbesondere über eine Magnetkarte möglich. Wird im Bildschirmdialog mit dem Computer ein Befehl zur Durchführung einer Datensicherung eingegeben, so fordert die erfindungsgemäße Steuereinheit über ein Anzeigedisplay die Eingabe einer Magnetkarte an. Nur wenn nach Auslesen der Magnetkarte eine übereinstimmende Kodierung einer autorisierten Person festgestellt wird, steuert die erfindungsgemäße Steuereinheit den Computer entsprechend zur Durchführung der Datensicherung an. Hierdurch wird vorteilhafterweise mit hoher Sicherheit vermieden, daß unberechtigte Personen, die nicht im Besitz einer entsprechenden Magnetkarte sind, auf Daten zugreifen und diese entwenden können.

In einer vorteilhaften Weiterbildung ist das erfindungsgemäße System mit einer Einrichtung zur unterbrechungsfreien Stromversorgung (USV-Einheit) ausgestattet. Diese USV-Einheit besitzt eine Puffer-Batterie mit nachgeschaltetem Wechselrichter, so daß sie in der Lage ist, bei einem Ausfall der Netzspannung das erfindungsgemäße System noch mindestens 10 bis 15 Minuten lang mit einer der Netzspannung entsprechenden Versorgungsspannung zu versorgen. Während dieser Zeit kann von der Steuereinheit das kontrollierte Abschalten des Computers veranlaßt werden. Dies bedeutet, daß zunächst die softwaremäßige Abschaltroutine durchgeführt wird, um alle Daten so abzuspeichern, daß sie später wieder verfügbar sind. Erst nach vollständigem Ablauf dieser Abschaltroutine schaltet die erfindungsgemäße Steuereinheit den Computer spannungsmäßig ab. Auf diese Weise ist sichergestellt, daß auch bei einem Ausfall der Netzspannung alle Daten erhalten bleiben.

Weitere Merkmale sowie Vorteile der Erfindung ergeben sich aus der nachfolgenden Beschreibung eines bevorzugten Ausführungsbeispiels.

Anhand der Zeichnung wird im folgenden die Erfindung beispielhaft näher erläutert. Dabei zeigen:
- Fig. 1: ein stark vereinfachtes, schematisches Blockschaltbild eines erfindungsgemäßen Systems zum Ansteuern eines Computers und
- Fig. 2: eine detailliertere Darstellung des Blockschaltbildes nach Fig. 1.

In beiden Zeichnungsfiguren sind gleiche bzw. gleichwirkende Teile und Komponenten stets mit den gleichen Bezugsziffern bezeichnet.

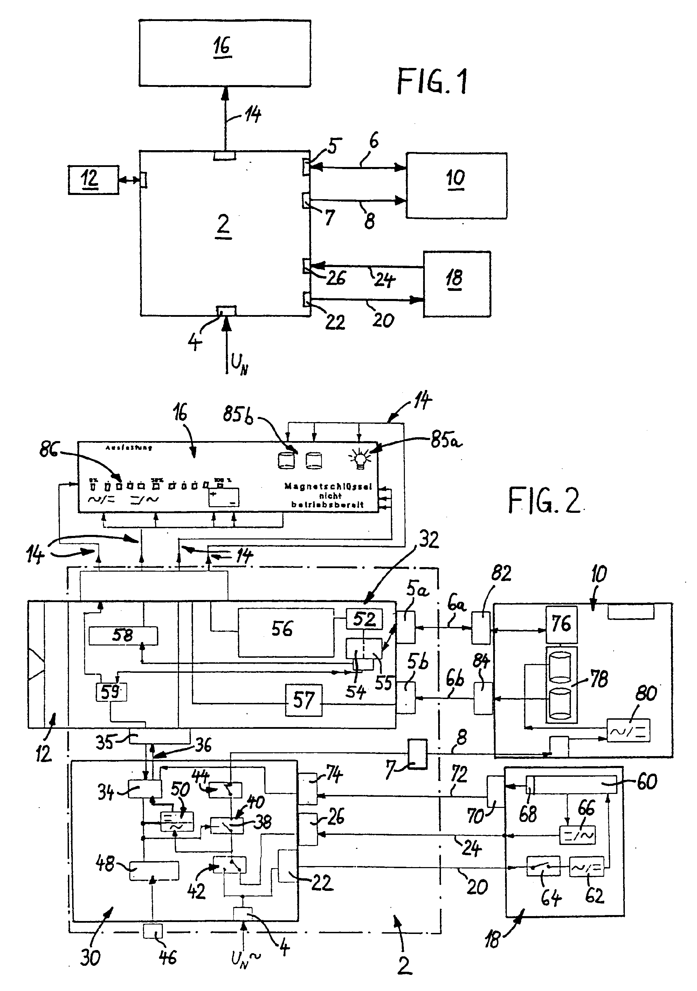

Wie sich aus beiden Figuren der Zeichnung ergibt, besteht ein erfindungsgemäßes System aus einer Steuereinheit 2, die einen Netzanschluß 4 zum Anschluß einer Netzspannung U_{N} aufweist, und die einerseits über ein Datenanschlußteil 5 und eine Datenverbindung 6 sowie andererseits über einen Spannungs-Ausgang 7 und eine Versorgungsspannungsverbindung 8 mit einem Computer 10 (Mikro-Computer) verbindbar ist. Das Datenanschlußteil 5 kann - wie in Fig. 2 dargestellt - aus mehreren, z.B. zwei Teilen 5a, Sb bestehen, so daß auch die Datenverbindung aus mehreren, z.B. zwei Einzelverbindungen 6a, 6b besteht, die ihrerseits natürlich wiederum aus mehreren Einzelleitungen bestehen können.
Es ist wesentlich, daß der Computer 10 keine eigene, direkte Spannungsversorgung besitzt, sondern seine Versorgungsspannung mittelbar, d.h. durch die erfindungsgemäße Steuereinheit 2 gesteuert, erhält. Bei Einsatz eines herkömmlichen Computers ist dafür zu sorgen, daß dessen Netz- bzw. Hauptschalter ausgebaut oder beispielsweise durch Überbrückung derart unwirksam gemacht wird, daß ein manuelles, von dem erfindungsgemäßen System unabhängiges Ein- und Ausschalten des Computers ausgeschlossen ist.

In der dargestellten, bevorzugten Ausführungsform der Erfindung ist die Steuereinheit 2 weiterhin mit einem Magnetkartenleser 12 sowie vorzugsweise auch über Ansteuerverbindungen 14 mit einem Anzeige-Display 16 verbunden. Ferner ist es besonders vorteilhaft, wenn das erfindungsgemäße System mit einer Stromversorgungseinheit 18 zur unterbrechungsfreien Stromversorgung, im folgenden kurz USV-Einheit genannt, ausgestattet ist. Dabei ist diese USV-Einheit 18 eingangsseitig über eine erste Leitungsverbindung (Hinleitung) 20 an einem ständig mit dem Netzanschluß 4 verbundenen Ausgang 22 der Steuereinheit 2 sowie ausgangsseitig über eine zweite Leitungsverbindung (Rückleitung) 24 an einem Eingang 26 der Steuereinheit 2 angeschlossen. Auf diese Weise wird die Netzspannung U_{N} zunächst über die USV-Einheit und erst dann weiter in das erfindungsgemäße System, d.h. zurück in die Steuereinheit 2, geführt. Wie im folgenden noch näher erläutert werden wird, ist die USV-Einheit 18 in der Lage, das erfindungsgemäße System bei einem Ausfall der Netzspannung U_{N} noch mindestens 10 bis 15 Minuten mit einer der Netzspannung entsprechenden Versorgungsspannung zu versorgen, um während dieser Zeit ein kontrolliertes Abschalten mit Datenspeicherung durchzuführen.

Gemäß Fig. 2 besteht die Steuereinheit 2 aus zwei Hauptkomponenten, nämlich einer Leistungssteuereinheit 30 und einer Kartenlesersteuereinheit 32, die insbesondere über Steckverbinderteile 34, 35 sowie Leitungsverbindungen 36 miteinander verbunden sind. Der Netzanschluß 4 der Leistungssteuereinheit 30 ist einerseits - wie bereits erwähnt - ständig mit dem Ausgang 22 für die zu der USV-Einheit 18 führende erste Leitungsverbindung 20 verbunden, sowie andererseits auch mit einem Anschluß eines Arbeitskontaktes 38 eines zentralen Schaltrelais 40. Der andere Anschluß dieses Arbeitskontaktes 38 ist mit dem Spannungsausgang 7 verbunden, an dem über die Versorgungsspannungsverbindung 8 der Computer 10 anschließbar ist. Somit wird erfindungsgemäß der Computer 10 spannungsmäßig über das Schaltrelais 40 bzw. dessen Arbeitskontakt 38 geschaltet, wobei das Relais 40 von der erfindungsgemäßen Steuereinheit 2 angesteuert wird.

Vorzugsweise ist zwischen dem Netzanschluß 4 und dem Arbeitskontakt 38 des Schaltrelais 40 ein Umschalter 42 angeordnet, dessen beweglicher Mittenkontakt mit dem Arbeitskontakt 38 verbunden ist und dessen stationäre Kontakte einerseits mit dem Netzanschluß 4 und andererseits mit dem über die zweite Leitungsverbindung 24 mit der USV-Einheit 18 verbundenen Eingang 26 verbunden sind. Mit dem Umschalter 42 ist es somit erfindungsgemäß möglich, die USV-Einheit beispielsweise bei hier auftretenden Störungen von dem System abzuschalten, d.h. zu überbrücken, und die Netzspannung U_{N} direkt auf den Arbeitskontakt 38 des Relais 40 zu schalten. Es ist weiterhin vorteilhaft, wenn zwischen dem Spannungsausgang 7 und dem Arbeitskontakt 38 des Relais 40 ein Ausschalter 44 angeordnet ist, der im Normalbetrieb stets geschlossen ist. Der Ausschalter 44 ist derart geräteintern angeordnet, daß er nur bei geöffnetem Gerät von autorisiertem Servicepersonal zum manuellen Abschalten des Computers 10 erreichbar ist.In Verbindung hiermit ist es zudem vorteilhaft, wenn die Leistungssteuereinheit 30 einen Kodierstecker-Anschluß 46 aufweist, der derart über einen Dekoder 48 mit dem zentralen Schaltrelais 40 verbunden ist, daß mittels eines in den Anschluß 46 einzusteckenden Kodiersteckers von autorisiertem Personal das Relais 40 unabhängig von dem erfindungsgemäßen System geschaltet werden kann. Dies ist insbesondere zu Prüf- und Reparaturzwecken erforderlich.

Die Leistungssteuereinheit 30 besitzt nun weiterhin ein Netzgerät 50, welches eingangsseitig - im dargestellten Ausführungsbeispiel über den Umschalter 42 - mit dem Netzanschluß 4 verbunden ist. Ausgangsseitig, d.h. gleichspannungsseitig, ist das Netzgerät 50 über die Steckverbinderteile 34, 35 mit der Kartenlesersteuereinheit 32 sowie über diese auch mit dem Display 16 verbunden. Somit dient das Netzgerät 50 als Gleichspannungsversorgung für die Steuereinheit 2 sowie auch das Display 16.

Die Kartenlesersteuereinheit 32 besitzt einen Kartenleser-Prozessor 52, der mit vorzugsweise zwei elektrisch programmierbaren, bestimmte Steuerprogramme enthaltenden Festwert- bzw. Programmspeichern (E-PROM) 54, 55 verbunden ist. Zumindest der zweite Festwertspeicher 55 ist über eine interne Datenverbindung mit dem mit dem Computer 10 über die Datenverbindung 6a verbindbaren Datenanschlußteil 5a verbunden. Somit kommuniziert die erfindungsgemäße Steuereinheit 2 mit dem Computer 10 über den Festwertspeicher 55 und die Datenverbindung 6a.Im dargestellten Ausführungsbeispiel besitzt die Kartenlesersteuereinheit 32 weiterhin Ansteuerbaugruppen 56, 57, 58, 59 für bestimmte optische Anzeigen des Displays 16, wie dies im folgenden noch näher erläutert werden wird.

Die USV-Einheit 18 weist eine Spannungspufferung 60 auf, die mindestens eine Batterie und vorzugsweise auch Spannungsstabilisierungseinrichtungen enthält. Die Spannungspufferung 60 ist eingangsseitig mit einem Netzteil 62 verbunden, welches seinerseits - vorzugsweise über einen "USV-internen" Ein/Ausschalter 64 - über die erste Leitungsverbindung 20 mit dem Ausgang 22 der Steuereinheit 2 verbunden ist. Ausgangsseitig ist die Spannungspufferung 60 mit einem Wechselrichter 66 verbunden, der seinerseits über die zweite Leitungsverbindung 24 mit dem Eingang 26 der Steuereinheit 2 verbunden ist. Die Spannungspufferung 60 besitzt weiterhin einen Signalausgang 68, der über eine vorzugsweise über Steckverbinder 70, 74 angeschlossene Signalleitung 72 sowie weiterhin innerhalb der Steuereinheit 2 über die Steckverbinderteile 34, 35 und eine der Leitungsverbindungen 36 mit dem Kartenleser-Prozessor 52 bzw. mindestens einem der Festwertspeicher 54, 55 verbunden ist. Bei Ausfall der Netzspannung U_{N} liefert die Spannungspufferung 60 über den Wechselrichter 66 weiter eine der Netzspannung entsprechende Wechselspannung zur Versorgung des erfindungsgemäßen Systems einschließlich des Computers 10. Ferner gibt die Spannungspufferung 60 in diesem Fall eine entsprechende Meldung über die Signalleitung 72 an die Steuereinheit 2 ab, die daraufhin bestimmte Steuerfunktionen veranlaßt, die im folgenden noch näher erläutert werden sollen.

Der Computer 10 besitzt in an sich bekannter Weise einen Prozessor 76 (CPU), einen beispielsweise als Plattenspeicher ausgebildeten Speicher 78 und ein Versorgungsnetzteil 80, welches eingangsseitig über die Versorgungsspannungsverbindung 8 mit dem Spannungsausgang 7 der erfindungsgemäßen Steuereinheit 2 verbunden ist und demzufolge stets seine Eingangsspannung mittelbar über die Steuereinheit 2 erhält. Der Prozessor 76 ist vorzugsweise über eine Steckverbindung 82 und die Datenverbindung 6a mit dem Datenanschlußteil 5a der Steuereinheit 2 verbunden, während der Speicher 78 vorzugsweise über eine weitere Steckverbindung 84 und die Datenverbindung 6b mit dem Datenanschlußteil 5b der Steuereinheit 2 verbunden ist. Dabei ist das Datenanschlußteil 5b intern mit der Ansteuerbaugruppe 57 verbunden, die bestimmte Anzeigen 85a, 85b des Displays 16 ansteuert, die einerseits eine Netzkontrolle (85a) und andererseits den jeweils in Betrieb befindlichen Speicher (85b) darstellen.

Im folgenden soll nun beispielhaft der Funktionsablauf des erfindungsgemäßen Systems in den einzelnen Betriebszuständen erläutert werden.

Im Ausgangszustand, d.h. bei (noch) ausgeschaltetem Computer 10, steuert der Prozessor 52 über den ersten Festwertspeicher 54 und die entsprechende Ansteuerbaugruppe 56 das Display 16 so an, daß eine Anzeige zur Aufforderung der Eingabe einer Magnetkarte, d.h. beispielsweise die Anzeige "Magnetschlüssel" oder dergleichen, erscheint. Es kann nun in dem Magnetkartenleser 12 eine Magnetkarte gelesen werden, wobei die Kodierungs-Daten in dem Festwertspeicher 54 softwaremäßig ausgewertet werden. Es wird geprüft, ob die auf der Magnetkarte vorhandene Kodierung mit der im Festwertspeicher 54 eingespeicherten identisch ist. Nur wenn dies der Fall ist, wird das Relais 40 angesteuert, so daß der Computer 10 über den Arbeitskontakt 38 mit Spannung versorgt wird. Es wird weiterhin von dem ersten auf den zweiten Festwertspeicher 55 und das hierin gespeicherte Softwareprogramm umgeschaltet. Der zweite Festwertspeicher 55 kommuniziert über die Datenverbindung 6a mit dem Prozessor 76 des Computers 10. In diesem Zustand ist es vorteilhaft, wenn kurzzeitig, beispielsweise für zwei Sekunden, alle Anzeigen, bei denen es sich insbesondere um LED's handeln kann, des Displays 16 leuchten. Dies stellt eine Funktionskontrolle dar. Anschließend leuchten in Abhängigkeit von der Ansteuerbaugruppe 56 nur solche Anzeigen, die den (noch) nicht betriebsbereiten Zustand (softwaremäßig) des Computers 10 anzeigen. Bei diesen Anzeigen handelt es sich z.B. um LED "nicht" sowie "betriebsbereit". Hiermit ist der hardwaremäßige, d.h. spannungsmäßige Einschaltvorgang für den Computer 10 abgeschlossen und das softwaremäßige Starten des jeweiligen Betriebssystems läuft nun nach bekannten Schemen ab.

Der zweite Festwertspeicher 55 arbeitet im Dialog mit dem Computer 10. Hierbei wird dann nach Ablauf des softwaremäßigen Startschemas insbesondere die Anzeige "Magnetschlüssel" sowie auch die Anzeige "nicht" abgeschaltet. Weiterhin wird der Kartenleser 12 abgeschaltet, so daß eine erneute Eingabe einer Magnetkarte in diesem Betriebszustand ausgeschlossen ist. Während dieses Betriebszustandes erfolgt vorzugsweise auch eine Zusatzfunktion dahingehend, daß im Dialog mit dem Computer 10 dessen softwaremäßige Auslastung ständig oder in Intervallen erfaßt und insbesondere in Prozent auf dem Display 16, d.h. vorzugsweise mittels in einer Reihe angeordneter LED's 86, angezeigt wird.

Im "normalen" Betriebszustand wird der Computer 10 über die USV-Einheit 18 mit einem gleichmäßigen Strom bzw. mit gleichmäßiger, konstanter, stabilisierter Spannung versorgt. Hierdurch werden Probleme durch auftretende Strom/Spannungsschwankungen vermieden. Tritt nun ein Ausfall der Netzspannung U_{N} auf, so liefert die USV-Einheit 18 über die Spannungspufferung 60 und den Wechselrichter 66 dennoch weiter eine der Netzspannung entsprechende Versorgungsspannung. Hierdurch arbeitet das erfindungsgemäße System einschließlich des Computers 10 zunächst störungsfrei weiter. Insbesondere nach einer Verzögerungszeit von beispielsweise bis zu 60 sec, wodurch vorteilhafterweise kurzzeitige Spannungsausfälle und -schwankungen "ausgefiltert" werden, gibt die USV-Einheit 18 nun weiterhin über die Signalleitung 72 eine Meldung an die Steuereinheit 2 ab, aufgrund dessen diese eine softwaremäßige Abschaltroutine des Computers 10 veranlaßt. Der Computer 10 meldet den Abschluß dieser Abschaltroutine zurück an die Steuereinheit 2, die erst daraufhin die Versorgungsspannung des Computers 10 über das Relais 40 abschaltet. Hierdurch werden alle Daten vor dem Abschalten ordnungsgemäß so abgespeichert, daß sie nachfolgend jederzeit wieder verfügbar sind.

Soll der Computer 10 aus dem "normalen" Betriebszustand heraus abgeschaltet werden, so wird hierzu ein entsprechender Softwarebefehl im Bildschirmdialog eingegeben. Auch in diesem Fall meldet der Computer 10 den ordnungsgemäßen Abschluß der Software-Abschaltroutine an die Steuereinheit 2, die erst dann den Computer 10 spannungsmäßig über das Relais 40 abschaltet. Bei diesem "normalen" Abschaltvorgang ist es zudem besonders vorteilhaft,daß das erfindungsgemäße System nach Eingabe des entsprechenden Softwarebefehls prüft, wie lang die letzte Datensicherung zurückliegt. Liegt diese länger zurück als eine vorzugsweise einstellbare Zeit, beispielsweise 24 Stunden, wird automatisch eine Datensicherung im Bildschirmdialog gestartet.

Für diese automatische Datensicherung, sowie aber auch für jede von einer Bedienungsperson gewünschte Datensicherung, fordert die Steuereinheit 2 über die Anzeige "Magnetschlüssel" die Eingabe einer Magnetkarte an, um zu prüfen, ob die jeweilige Bedienungsperson zu einer Datensicherung berechtigt ist.

Das erfindungsgemäß Ein/Ausschalt-System stellt für die Anwendung eine außerordentlich große Sicherheit gegen Datenverlust und Datenmißbrauch dar. Um andererseits aber hierdurch eine Fehlersuche im Hardware-Bereich nicht zu beeinträchtigen, ist es zu Servicezwecken erfindungsgemäß möglich, über Einstecken eines Kodiersteckers in den Kodierstecker-Anschluß 46 die Schaltfunktionen des erfindungsgemäßen Systems unwirksam zu machen. Dabei kann dann der Computer 10 manuell über den geräteinternen Ausschalter 44 geschaltet werden. Bei Störungen im Bereich der USV-Einheit 18 kann diese zudem manuell über den Umschalter 42 abgeschaltet, d.h. von dem erfindungsgemäßen System getrennt werden.

Nach jedem gesteuerten Abschaltvorgang geht das System wieder in seinen Ausgangszustand über, in dem zum Einschalten des Computers ein erneutes Einlesen einer Magnetkarte möglich ist.

Die Erfindung ist nicht auf das dargestellte und beschriebene Ausführungsbeispiel beschränkt, sondern umfaßt auch alle im Sinne der Erfindung gleichwirkenden Mittel. So wäre es z.B. ebenfalls möglich, das Relais 40 mit dem Kontakt 38 in den Computer 10 "einzubauen", wodurch sich dann die Versorgungsspannungsverbindung 8 zwischen der Steuereinheit 2 und dem Computer 10 erübrigen könnte. Hierbei würde dann das Relais 90 über ein über die Datenverbindung 6 übertragenes Signal angesteuert werden.

## Patentansprüche

1. Computer-Steuersystem mit einer Steuereinheit (2) und einem Computer (10), wobei der Computer (10) keine eigene, direkte Spannungsversorgung aufweist, sondern seine Versorgungsspannung mittelbar über die Steuereinheit (2) gesteuert erhält, wozu die Steuereinheit (2) über eine Datenverbindung (6) und eine Versorgungsspannungsverbindung (8) mit dem Computer (10) verbindbar ist, wobei zum Abschalten des Computers (10) ein Abschaltbefehl im Bildschirmdialog als Software-Befehl eingegeben und dadurch computerseitig zunächst eine softwaremäßige Ausschaltroutine gestartet wird, durch die zur Datensicherung alle Daten so abgespeichert werden, daß sie später jederzeit wieder verfügbar sind, wobei der Abschluß der Ausschaltroutine von dem Computer (10) an die Steuereinheit (2) gemeldet wird und die Steuereinheit (2) erst dann den Computer (10) hardwaremäßig durch Unterbrechen der Versorgungsspannung abschaltet.

2. Steuersystem nach Anspruch 1,
**dadurch gekennzeichnet**, daß die Steuereinheit (2) auch das Einschalten des Computers (10) steuert, und zwar derart, daß der Computer (10) nur bei positivem Ergebnis einer vorausgehenden Legitimationsprüfung eingeschaltet wird.

3. Steuersystem nach Anspruch 1 oder 2,
**dadurch gekennzeichnet**, daß die Steuereinheit (2) zusätzliche Betriebsfunktionen des Computers (10), insbesondere eine Datensicherung, ansteuert, wobei nach Eingabe eines softwaremäßigen Befehls zur Durchführung einer Datensicherung die Steuereinheit (2) zunächst insbesondere über ein Display (16) eine Legitimationsprüfung anfordert und nur bei positivem Ergebnis dieser Legitimationsprüfung die Datensicherung des Computers (10) veranlaßt.

4. Steuersystem nach Anspruch 2 oder 3,
**dadurch gekennzeichnet**, daß die Steuereinheit (2) zur Durchführung der Legitimationsprüfung(en) ein Magnetkarten-Lesegerät (12) sowie Speicher- und Vergleichseinrichtungen (52, 54, 55) aufweist.

5. Steuersystem nach einem oder mehreren der Ansprüche 1 bis 4,
**gekennzeichnet durch** eine mit der Steuereinheit (2) verbundene Einrichtung (18) zur derart unterbrechungsfreien Stromversorgung, daß bei Ausfall der Netzspannung (U_{N}) noch eine bestimmte Zeit lang eine der Netzspannung (U_{N}) entsprechende Versorgungsspannung zur Verfügung steht, wobei während dieser Zeit durch die Steuereinheit (2) die kontrollierte Ausschaltroutine des Computers (10) veranlaßt und der Computer (10) erst nach vollständigem Ablauf dieser Ausschaltroutine von der Steuereinheit (2) ausgeschaltet wird.

6. Steuersystem nach Anspruch 5,
**dadurch gekennzeichnet**, daß die kontrollierte Ausschaltroutine von der Steuereinheit (2) erst eine vorbestimmte Verzögerungszeit nach Ausfall der Netzspannung (U_{N}) veranlaßt wird.

7. Steuersystem nach einem oder mehreren der Ansprüche 1 bis 6,
**dadurch gekennzeichnet**, daß die Steuereinheit (2) bei jedem spannungsausfallunabhängigen, durch Eingabe des Software-Abschaltbefehls gestarteten Ausschaltvorgang im Dialog mit dem Computer (10) prüft, wie lang die letzte Datensicherung zurückliegt, und in dem Fall, daß diese länger als eine vorbestimmte Zeit zurückliegt, eine Datensicherung mit vorhergehender Legitimations-Anforderung und -Prüfung startet.

8. Steuersystem nach einem oder mehreren der Ansprüche 1 bis 7,
**dadurch gekennzeichnet**, daß die Steuereinheit (2) im Betriebszustand des Computers (10) ständig oder zeitweise dessen softwaremäßige Betriebs-Auslastung ermittelt und auf dem Display (16) anzeigt.

9. Steuersystem nach einem oder mehreren der Ansprüche 1 bis 8,
**dadurch gekennzeichnet**, daß die Steuereinheit (2) für den Dialog mit einem Prozessor (76) des Computers (10) einen Prozessor (52) mit mindestens einem elektrisch programmierbaren Speicher (54, 55) aufweist.

10. Steuersystem nach einem oder mehreren der Ansprüche 1 bis 9,
**dadurch gekennzeichnet**, daß innerhalb der Steuereinheit (2) zwischen der Versorgungsspannungsverbindung (8) und einem Netzanschluß (4) ein Arbeitskontakt (38) eines von der Steuereinheit (2) angesteuerten Schaltrelais (40) angeordnet ist.

11. Steuersystem nach Anspruch 10,
**dadurch gekennzeichnet**, daß zwischen dem Netzanschluß (4) und dem Arbeitskontakt (38) des Schaltrelais (40) die Einrichtung (18) zur unterbrechungsfreien Stromversorgung insbesondere abschaltbar zwischengeschaltet ist.

12. Steuersystem nach Anspruch 10 oder 11,
**dadurch gekennzeichnet**, daß die Versorgungsspannung des Computers (10) nach einem insbesondere durch Einstecken eines Kodiersteckers in einen Kodierstecker-Anschluß (46) verursachten Schließen des Relais-Arbeitskontaktes (38) über einen geräteinternen, zwischen dem Relais-Arbeitskontakt (38) und der Versorgungsspannungsverbindung (8) angeordneten Schalter (44) manuell schaltbar ist.

## Claims

1. Computer control system, having a control unit (2) and a computer (10), the computer (10) not having a direct voltage supply of its own but receiving its supply voltage in controlled manner indirectly by way of the control unit (2), to which end the control unit (2) can be connected to the computer (10) by way of a data connection (6) and a supply voltage connection (8), to switch off the computer (10) a switch-off command being input in the screen dialog as a software command and as a result there being triggered on the computer side first of all a software cut-out routine by means of which for data protection all the data is stored such that it can be accessed again later at any time, the completion of the cut-out routine being signalled to the control unit (2) by the computer (10) and the control unit (2) only then switching off the hardware of the computer by interrupting the supply voltage.

2. Control system according to Claim 1, characterized in that the control unit (2) also controls the switching on of the computer (10) such that the computer (10) is only switched on if the result of a preceding legitimacy check is positive.

3. Control system according to Claim 1 or 2, characterized in that the control unit (2) controls additional operating functions of the computer (10), in particular data protection, after inputting a software command to carry out data protection the control unit (2) first of all requesting a legitimacy check, in particular by way of a display (16), and only effecting the data protection of the computer (10) if the result of this legitimacy check is positive.

4. Control system according to Claim 2 or 3, characterized in that the control unit (2) for carrying out the legitimacy check(s) has a magnetic card reading device (12) and storage and comparison devices (52, 54, 55).

5. Control system according to one or more of Claims 1 to 4, characterized by a device (18), connected to the control unit (2), for interruption-free current supply such that if the mains voltage (U_{N}) fails a supply voltage corresponding to the mains voltage (U_{N}) is still available for a certain period of time, the controlled cut-out routine of the computer (10) being effected during this time by the control unit (2) and the computer (10) only being switched off by the control unit (2) once this cut-out routine has been fully carried out.

6. Control system according to Claim 5, characterized in that the controlled cut-out routine is only effected by the control unit (2) a predetermined delay time after failure of the mains voltage (U_{N}).

7. Control system according to one or more of Claims 1 to 6, characterized in that for each cut-out procedure which is independent of the voltage failure and is triggered by inputting the software switch-off command the control unit (2), in dialog with the computer (10), checks how long ago the last data protection took place and if this took place longer ago than a predetermined period of time triggers data protection with a preceding legitimacy request and check.

8. Control system according to one or more of Claims 1 to 7, characterized in that in the operating state of the computer (10) the control unit (2) continuously or intermittently determines the software operating load thereof and displays it on the display (16).

9. Control system according to one or more of Claims 1 to 8, characterized in that the control unit (2) for dialog with a processor (76) of the computer (10) has a processor (52) with at least one electrically programmable storage device (54, 55).

10. Control system according to one or more of Claims 1 to 9, characterized in that a working contact (38) of a switching relay (40) controlled by the control unit (2) is arranged within the control unit (2) between the supply voltage connection (8) and a mains connection (4).

11. Control system according to Claim 10, characterized in that the device (18) for interruption-free current supply is connected between the mains connection (4) and the working contact (38) of the switching relay (40) in particular so that it can be switched off.

12. Control system according to Claim 10 or 11, characterized in that the supply voltage to the computer (10) can be switched manually after the closing, effected in particular by plugging a coding plug into a coding plug terminal (46), of the relay working contact (38) by way of a switch (44) within the device and arranged between the relay working contact (38) and the supply voltage connection (8).

## Revendications

1. Système de commande d'ordinateur comprenant une unité de commande (2) et un ordinateur (10), l'ordinateur (10) ne comportant pas d'alimentation de courant propre et directe mais recevant sa tension d'alimentation indirectement commandé par l'unité de commande (2), ce pourquoi l'unité de commande (2) peut être reliée à l'ordinateur (10) au moyen d'une transmission de données (6) et d'une transmission de tension d'alimentation (8), où, pour arrêter l'ordinateur (10), une commande d'arrêt est entrée par dialogue sur l'écran sous la forme d'une commande de logiciel et ainsi une routine d'arrêt sous forme de logiciel est d'abord lancée du côté de l'ordinateur, par laquelle toutes les données sont stockées pour une mise en mémoire de telle manière qu'elles seront ensuite à tout moment à nouveau accessibles, la fin de la routine d'arrêt étant annoncée par l'ordinateur (10) à l'unité de commande (2) et l'unité de commande (2) n'éteignant qu'à ce moment l'ordinateur (10) par l'interruption de la tension d'alimentation.

2. Système de commande selon la revendication 1, caractérisé en ce que l'unité de commande (2) commande également l'allumage de l'ordinateur (10), et ce de telle manière que l'ordinateur (10) n'est allumé qu'en cas de résultat positif d'un test de légitimation préalable.

3. Système de commande selon la revendication 1 ou la revendication 2, caractérisé en ce que l'unité de commande (2) commande d'autres fonctions d'exploitation de l'ordinateur (10), en particulier une mise en mémoire, où, après entrée d'une commande sous forme de logiciel pour réaliser une mise en mémoire, I'unité de commande (2) ordonne d'abord un test de légitimation en particulier par l'intermédiaire d'un affichage (16) et ne commande la mise en mémoire de l'ordinateur (10) qu'en cas de résultat positif de ce test de légitimation.

4. Système de commande selon la revendication 2 ou la revendication 3, caractérisé en ce que l'unité de commande (2) présente pour réaliser le/les test (s) de légitimation un lecteur de cartes magnétiques (12) ainsi que des dispositifs de stockage et de comparaison (52, 54, 55).

5. Système de commande selon l'une ou plusieurs des revendications 1 à 4, caractérisé par un dispositif (18) relié à l'unité de commande (2) et destiné à une alimentation de courant sans coupure, telle que lors d'un arrêt de la tension du secteur (U_{N}), une tension d'alimentation correspondant à la tension du secteur (U_{N}) est encore disponible pendant un certain temps, I'unité de commande (2) commandant pendant ce temps la routine d'arrêt contrôlée de l'ordinateur (10) et l'ordinateur (10) n'étant arrêté par l'unité de commande (2) qu'après le déroulement complet de cette routine d'arrêt.

6. Système de commande selon la revendication 5, caractérisé en ce que la routine d'arrêt contrôlée n'est commandée par l'unité de commande (2) qu'après une temporisation prédéterminée suivant l'arrêt de la tension du secteur (U_{N}).

7. Système de commande selon l'une ou plusieurs des revendications 1 à 6, caractérisé en ce que, à chaque procédure d'arrêt indépendante d'une panne de secteur et lancée par l'entrée de la commande d'arrêt de logiciel, I'unité de commande (2) examine, en dialogue avec l'ordinateur (10), à quand remonte la dernière mise en mémoire, et, si celle-ci remonte à plus qu'un temps prédéterminé, lance une mise en mémoire précédée d'une demande et d'un test de légitimation.

8. Système de commande selon l'une ou plusieurs des revendications 1 à 7, caractérisé en ce que l'unité de commande (2) , en mode de fonctionnement de l'ordinateur (10), détermine en permanence ou de temps en temps l'utilisation à plein de son logiciel et l'affiche sur l'affichage (16).

9. Système de commande selon l'une ou plusieurs des revendications 1 à 8, caractérisé en ce que l'unité de commande (2) présente, pour le dialogue avec un processeur (76) de l'ordinateur (10), un processeur (52) avec au moins une mémoire (54, 55) électriquement programmable.

10. Système de commande selon l'une ou plusieurs des revendications 1 à 9, caractérisé en ce qu'un contact de travail (38) d'un relais de commutation (40) commandé par l'unité de commande (2) est disposé à l'intérieur de l'unité de commande (2) entre la transmission de tension d'alimentation (8) et un branchement au secteur (4).

11. Système de commande selon la revendication 10, caractérisé en ce qu'entre le branchement au secteur (4) et le contact de travail (38) du relais de commutation (40) est inséré, en particulier de manière déconnectable, le dispositif (18) destiné à une alimentation de courant sans coupure.

12. Système de commande selon la revendication 10 ou la revendication 11, caractérisé en ce que la tension d'alimentation de l'ordinateur (10) est commutable manuellement au moyen d'un commutateur (44) interne à l'appareil, disposé entre le contact de travail (38) du relais et la transmission de tension d'alimentation (8), après une fermeture du contact de travail (38) du relais causé en particulier par l'enfichage d'une fiche de codage dans un branchement (46) de fiche de codage.
